# FASCICULE DE BREVET EUROPEEN

(11) **EP 1 632 084 B1**
(45) Date de publication et mention de la délivrance du brevet: **12.08.2009**
(21) Numéro de dépôt: 04767252.2
(22) Date de dépôt: 03.06.2004
(51) Int. Cl.: H04M 11/06

(54) **DISPOSITIF ADAPTATEUR D'IMPEDANCE DU CANAL DE TRANSMISSION HAUT-DEBIT D'UNE INSTALLATION TERMINALE CUIVRE**
IMPEDANZADAPTER FÜR EINEN ÜBERTRAGUNGSKANAL MIT HOHER BANDBREITE EINES KUPFERVERDRAHTETEN TERMINAL-SYSTEMS
IMPEDANCE ADAPTER FOR A HIGH-BANDWIDTH TRANSMISSION CHANNEL OF A COPPER-WIRED TERMINAL SYSTEM

(30) Priorité: 10.06.2003 FR 0307036
(43) Date de publication de la demande: 08.03.2006
(73) Titulaire: FRANCE TELECOM, 75015 Paris (FR)
(72) Inventeur: RAHYER, Alain, F-22300 Lannion (FR); MARIOTTE, Hubert, F-22700 Perros-Guirec (FR)
(74) Mandataire: Simon, Viviane
(86) Numéro de dépôt international: PCT/FR2004/001384
(87) Numéro de publication internationale: WO 2004/112365

(56) Documents cités:
- GB-A- 2 339 506
- US-A- 5 848 150
- US-B1- 6 459 790

## Description

La présente invention concerne un dispositif adaptateur d'impédance du canal de transmission haut-débit d'une installation terminale cuivre.

L'invention se situe dans le domaine des transmissions haut-débit et trouve typiquement son application dans la transmission de services large bande délivrés vers une installation terminale cuivre ITC raccordée à un réseau d'accès.

Dans le contexte actuel de la montée en débit des transmissions, et de l'explosion des services sur Internet, de nombreux systèmes d'accès large bande ont été introduit chez les abonnés. Ces systèmes d'accès à haut-débit utilisent le câblage existant, c'est-à-dire le câblage sur paire de cuivre torsadée. Ainsi, les techniques de codage numérique de type x-DSL permettent de transporter sur les paires de cuivres existantes du réseau téléphonique analogique (RTC) ou numérique (RNIS) des débits importants assurant vis-à-vis des usagers des services de type Internet rapide ou audio visuels. On désigne par x-DSL tous les services haut-débit large bande regroupant toutes les familles technologiques telles que HDSL, SDSL, ADSL, VDSL, ADSL-Lite etc...

Cependant, ces systèmes x-DSL, qui permettent de véhiculer la voix et les données sur un même support, doivent pouvoir s'adapter aux différentes topologies de l'infrastructure terminale cuivre (sections d'extrémité de ligne en étoile, pont ou dérivation, leur longueur etc...), supporter toutes les variations dynamiques des caractéristiques de transmission et coexister avec les services bande étroite de type bande vocale (analogique ou RNIS).

Cette exigence s'applique essentiellement pour les systèmes fonctionnant à très haute fréquence, typiquement dans une bande spectrale supérieure à 3 MHz. C'est le cas par exemple des systèmes VDSL dont le spectre fréquentiel est très large puisqu'il s'étale de 138kHz à 12 MHz. En effet, l'utilisation d'un canal de transmission dans une plage de fréquences élevées n'est pas sans conséquence sur la qualité de la liaison. La transmission dans la bande spectrale supérieure à 3 MHz, notamment, est sensible aux réflexions sur la ligne dues à l'existence de branches ouvertes et/ ou de charges capacitives.

On définit par branche ouverte, toute section d'extrémité de ligne non raccordée, c'est à dire toute prise de raccordement téléphonique non occupée. On définit par charge capacitive, toute section d'extrémité de ligne raccordée à un terminal bande étroite à charge capacitive, un poste téléphonique par exemple, via une prise téléphonique.

Dans le cadre de la normalisation internationale, deux plans de fréquence VDSL, appelés 997 et 998, et aux spectres incompatibles ont été inclus dans le standard ETSI. Le premier offre une plus grande place au canal remontant et favorise plutôt les haut-débits symétriques (26 Mbit/s dans le sens descendant et 26 Mbits/s maximum dans le sens remontant), tandis que le second privilégie davantage les débits asymétriques avec un débit plus important sur le canal descendant (34 Mbits/s sur le canal descendant et 4 Mbits/s maximum sur le canal remontant).

L'invention va maintenant être présentée au regard de l'art antérieur :
- la figure 1 est un schéma d'une installation terminale cuivre selon l'état de la technique comprenant un filtre unique,
- la figure 2 est un schéma d'une installation terminale cuivre selon l'art antérieur comprenant des filtres distribués.

Une installation terminale cuivre (ITC) peut présenter deux types de configuration possibles. Elle peut en effet présenter une configuration dite "privative", de type pavillonnaire, ou bien une configuration dite "collective", de type desserte d'immeuble. La présente invention s'applique indifféremment aux deux types de configuration.

Une liaison VDSL classique comprend deux équipements: un multiplexeur d'accès DSL multi-ports, encore noté classiquement DSLAM, et un modem usager implantés respectivement au central et chez l'usager au sein d'une installation terminale cuivre (ITC) et reliés entre eux à travers un réseau d'accès RA. La longueur maximale de la ligne est d'environ 1 km. Dans le cas d'une architecture dite "FTTCab", le DSLAM est déporté du central vers un sous-répartiteur et le raccordement entre le central et le DSLAM est en fibre optique. Ces architectures sont connues de l'homme du métier et ne sont pas plus détaillées ici.

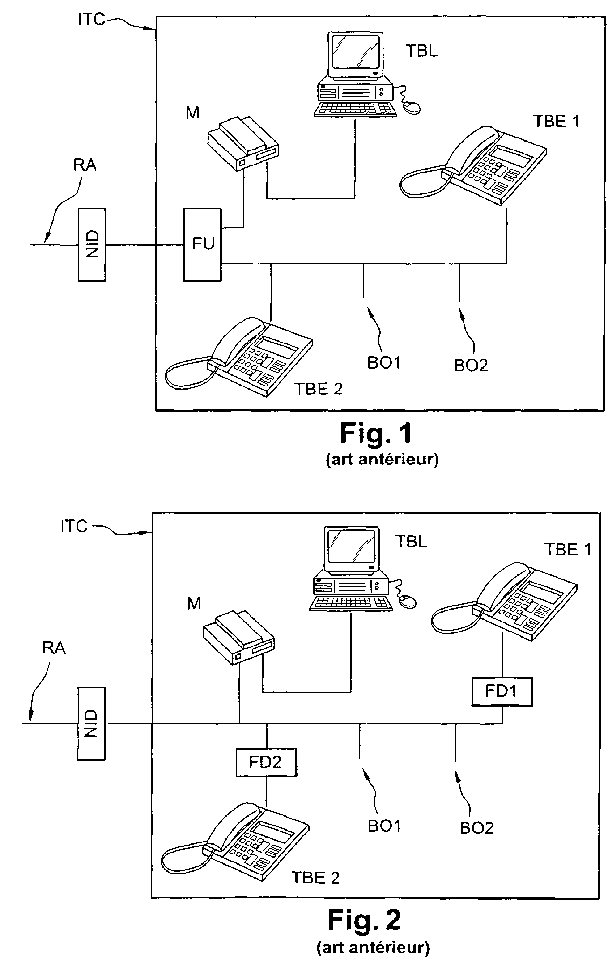

La liaison VDSL doit également être transparente à la voix téléphonique. Chez l'usager, le point d'entrée de l'installation terminale cuivre (ITC) se fait à partir de la réglette d'entrée de domicile, encore dénommée NID (de l'anglais "Network Interface Device"), et la fonction de filtrage, permettant de séparer la bande vocale des services large bande, peut être réalisée suivant les deux cas d'installation représentés sur les figures 1 et 2.

Dans le premier cas (figure 1) l'ITC comprend un dispositif, couramment appelé "splitter", comprenant un filtre unique FU en entrée de domicile, juste derrière le NID. Ce filtre unique FU permet de filtrer la partie basse du spectre. Ainsi, le "splitter" permet de séparer la bande vocale, qui est dirigée vers des terminaux bande étroite TBE1, TBE2 tels que des téléphones, des services large bande, qui sont transmis à un terminal large bande TBL, tel qu'un ordinateur par exemple, via un modem haut-débit M de type VDSL dans cet exemple particulier. Ce type de filtre FU est en général un filtre d'ordre élevé (n>5) ce qui nécessite l'intervention de l'opérateur téléphonique pour son installation chez l'usager.

Dans le deuxième cas (figure 2) l'ITC comprend des filtres distribués FD1, FD2. Ces filtres sont des micro-filtres passifs, en général d'ordre 2, enfichables dans les prises de raccordement téléphoniques, devant les terminaux bande étroite TBE1, TBE2. Ces filtres permettent ainsi d'éviter que les signaux large bande perturbent la téléphonie et réciproquement. Ils constituent des composants bas coût et faciles à mettre en oeuvre par l'usager lui-même. Toutefois, on ne peut pas multiplier indéfiniment leur nombre car l'impédance résultante qu'ils présentent peut alors être pénalisante pour les valeurs de pertes par réflexion, plus communément appelées "return-loss", et qui peut par voie de conséquence dégrader la qualité vocale de la liaison téléphonique. De plus, dans le cas d'une ITC avec filtres distribués, la transmission haut-débit dans la bande de fréquences 3-12 MHz est sensible aux réflexions sur la ligne en présence de branches ouvertes BO1, BO2 et/ou de charges capacitives TBE1, TBE2.

Pour éviter ce problème, on pourrait insérer dans chaque prise de raccordement une impédance de terminaison qui permettrait de favoriser la transmission large bande tout en réduisant les phénomènes d'atténuation dus aux désadaptations de la ligne téléphonique. Une telle impédance de terminaison présenterait alors de préférence une valeur proche de la valeur moyenne de l'impédance du câble cuivre de la ligne téléphonique, dans la bande de fréquence comprise entre 3 et 12 MHz, c'est-à-dire une valeur de l'ordre de 135 Ω. Cependant, lorsqu'un modem, de type VDSL par exemple, est raccordé à une telle prise de raccordement téléphonique, dans laquelle une impédance de terminaison a été, préalablement insérée, les performances de la liaison haut-débit sont dégradées. En effet, la prise de raccordement n'est alors pas transparente à la transmission des services large bande dans la mesure où la valeur de l'impédance qui y a été préalablement insérée est proche de celle du modem (de l'ordre de 135Ω dans la bande 3-12 MHz).

Une solution pour éviter les problèmes de dégradation de la qualité de la liaison haut-débit dans la bande de fréquences 3-12 MHz dus aux désadaptations de la ligne, consisterait à adapter les branches ouvertes en insérant une impédance de terminaison dans les prises de raccordement téléphonique, et à retirer ladite impédance préalablement insérée dans une prise dès qu'on raccorde un modem à cette prise, afin d'éviter les dégradations des performances de la liaison haut-débit. Cependant, cette solution est très contraignante car elle est entièrement manuelle et oblige l'utilisateur à penser à retirer l'impédance préalablement insérée dans une prise lorsqu'il souhaite y brancher un modem haut-débit.

Le document de l'art antérieur GB 2339506 décrit un module qui adapte la ligne téléphonique de l'abonné en présentant une impédance élevée dans le domaine des hautes fréquences réservé aux communications de données.

Aussi, le problème technique objet de la présente invention consiste à proposer un dispositif adaptateur d'impédance d'au moins un canal de transmission haut-débit d'une installation terminale cuivre raccordée à un réseau d'accès délivrant des services bande étroite (analogique ou RNIS) et des services large bande (x-DSL), ladite installation comprenant au moins un modem haut-débit de type x-DSL, et au moins une prise de raccordement, qui permettrait d'adapter automatiquement l'impédance du canal de transmission haut-débit selon qu'un modem est branché ou non sur une prise de raccordement de l'installation, de manière d'une part à éviter les désadaptations de la ligne dues à la présence de branches ouvertes et/ou de charges capacitives, et d'autre part à éviter les problèmes de dégradation des performances de la liaison haut-débit, lorsqu'un modem haut-débit est raccordé sur une prise de raccordement dans laquelle une impédance de terminaison a été préalablement insérée.

La solution au problème technique posé est obtenue, selon la présente invention, par le fait que le dispositif adaptateur comprend :
- un module d'ajustement, implanté dans ladite prise de raccordement, constitué par un circuit RC comprenant, en série, au moins une résistance (R), des condensateurs (C1, C2) et au moins une diode varicap (D1, D2), et destiné à insérer une impédance de terminaison dans ladite prise de raccordement, lorsqu'elle n'est pas connectée audit modem haut-débit,
- un module de couplage, raccordé au modem haut-débit (M) et destiné à s'unir audit module d'ajustement lorsque ledit modem haut-débit est raccordé à ladite prise de raccordement, comprenant des résistances (R1, R2), chacune d'elles étant destinée à être connectée en parallèle sur un condensateur (C1, C2) du module d'ajustement (10) de manière à polariser en inverse au moins l'une des diodes varicap (D1, D2), de manière à transformer l'impédance insérée dans la prise de raccordement de telle sorte que cette dernière devienne transparente à la transmission haut-débit de services large bande.

Ainsi, le module d'ajustement permet d'insérer une impédance de terminaison, de valeur finie, dans la prise de raccordement. Il fait ainsi office de bouchon et protège la liaison haut-débit contre les réflexions sur la ligne, c'est-à-dire les désadaptations dues à la présence de branches ouvertes et/ou de charges capacitives, qui perturbent fortement la transmission haut-débit dans la bande de fréquences comprise entre 3 et 12 MHz. De plus, lorsque le modem haut-débit est branché sur une prise de raccordement, le module d'ajustement et le module de couplage s'unissent pour modifier automatiquement l'impédance de la prise, dans la bande de fréquence 3-12 MHz, de telle sorte que l'impédance résultante est infiniment grande. Cette impédance résultante présente alors par exemple une valeur comprise entre 1 kΩ et 10 MΩ, et devient transparente vis-à-vis de la transmission haut-débit.

L'invention concerne en outre une installation terminale cuivre raccordée à un réseau d'accès portant des services bande étroite et des services large bande et comprenant des prises de raccordement et au moins un modem haut-débit de type x-DSL. Cette installation est remarquable en ce qu'elle comporte des dispositifs adaptateurs d'impédance conformes à l'invention.

L'invention concerne aussi un procédé d'adaptation d'impédance d'au moins un canal de transmission haut-débit d'une installation terminale cuivre (ITC) raccordée à un réseau d'accès délivrant des services bande étroite et des services large bande, ladite installation comprenant au moins un modem haut-débit (M), et au moins une prise de raccordement (P ; P1, P2, P3), caractérisé en ce que le procédé comprend les étapes suivantes:
- Une étape d'ajustement comportant l'insertion d'une impédance de terminaison dans ladite prise (P ; P1, P2, P3) de raccordement, pour insérer un module d'ajustement (10, 30) comprenant, en série, au moins une résistance (R), des condensateurs (C1, C2) et au moins une diode varicap (D1, D2), lorsqu'elle n'est pas connectée audit modem haut-débit (M),
- et, lorsque ledit modem haut-débit est raccordé à ladite prise de raccordement, une étape de couplage comportant la transformation de ladite impédance insérée dans la prise de raccordement, de telle sorte que cette dernière devienne transparente à la transmission haut-débit de services large bande, pour insérer un module de couplage (20, 40) comprenant des résistances (R1, R2), chacune d'elles étant destinée à être connectée en parallèle sur un condensateur (C1, C2) dudit module d'ajustement (10) de manière à polariser en inverse au moins l'une des diodes varicap (D1, D2).
   Dans toute la suite de la description, il est fait référence à une liaison haut-débit de type VDSL, mais bien sûr l'invention ne se limite pas à ce type d'application. Elle s'applique en fait à toute liaison haut-débit dont le spectre fréquentiel est supérieur à 3 MHz.
   D'autres particularités et avantages de l'invention apparaîtront à la lecture de la description suivante faite à titre d'exemple illustratif et non limitatif, en référence aux figures annexées, qui représentent .
- la figure 1, déjà décrite, un schéma d'une installation terminale cuivre selon l'état de la technique comprenant un filtre unique,
- la figure 2, déjà décrite, un schéma d'une installation terminale cuivre selon l'état de la technique comprenant des filtres distribués,

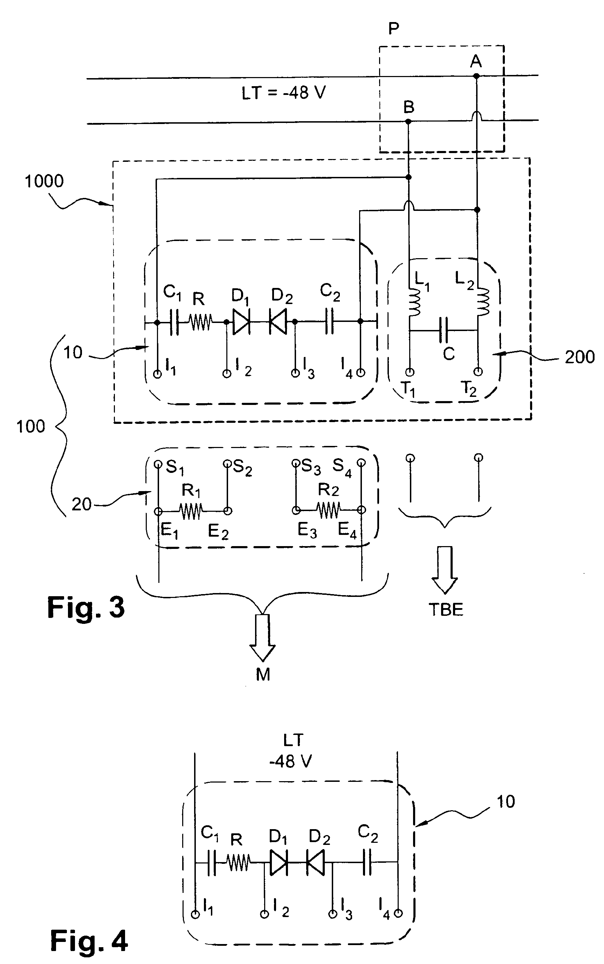

- la figure 3, un schéma d'un dispositif selon l'invention,
- la figure 4, un schéma du dispositif de la figure 3 selon une configuration dissociée,

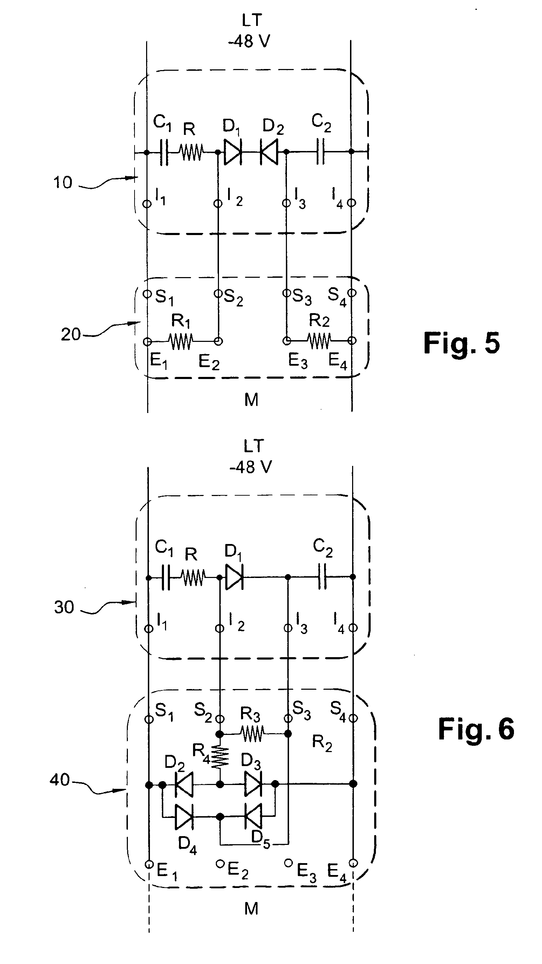

- la figure 5, un schéma du dispositif de la figure 3 selon une configuration assemblée,
- la figure 6, un schéma d'un dispositif selon un deuxième mode de réalisation et selon une configuration assemblée,

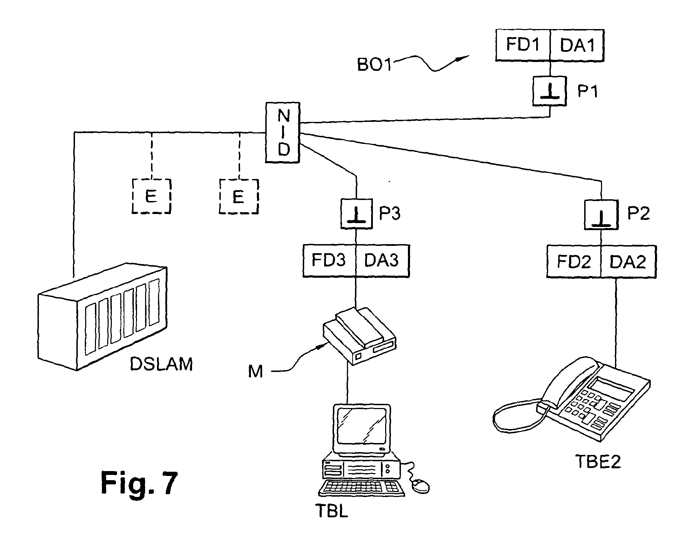

- la figure 7, un schéma d'une installation privative dans laquelle des mesures de débit en ligne ont été effectuées en présence et en l'absence du dispositif de la figure 3.

La figure 3 schématise un dispositif adaptateur d'impédance d'au moins un canal de transmission haut-débit d'une installation terminale cuivre. Ce dispositif, référencé 100, comporte deux modules distincts, référencés 10 et 20, qui permettent d'insérer automatiquement une valeur d'impédance différente dans la prise P de raccordement, en entrée du réseau d'accès, selon qu'un modem haut-débit M est raccordé ou non à cette prise P de raccordement.

La ligne téléphonique LT, dont l'alimentation en tension est classiquement égale à -48 V, porte à la fois les services bande étroite et les services large bande.

Le premier module, référencé 10, est un module d'ajustement qui est implanté dans la prise de raccordement P. Ce module permet d'insérer une impédance de terminaison de valeur finie dans la prise P.

Le deuxième module, référencé 20, est un module de couplage qui est de préférence raccordé au modem haut-débit, par exemple fixé à la prise de branchement du modem. Ce module est destiné à s'unir avec le module d'ajustement 10 au moment du branchement du modem sur la prise P. Cette union des deux modules permet de modifier automatiquement la valeur de l'impédance insérée dans la prise P de raccordement pour que celle-ci puisse devenir transparente à la transmission haut-débit dans la bande de fréquence comprise entre 3 et 12 MHz.

Le dispositif adaptateur comporte des composants passifs peu coûteux et peu encombrants. Le faible encombrement de ce dispositif permet donc de l'intégrer dans le même boîtier 1000 qu'un filtre distribué 200.

Le filtre distribué 200 permet de masquer l'impédance du terminal bande étroite TBE dont la charge capacitive est préjudiciable pour la qualité du canal de transmission large-bande. Il comporte classiquement un circuit LC.

Le dispositif adaptateur d'impédance est raccordé à la prise P de raccordement, de préférence en parallèle au filtre distribué 200 qui est logé dans le même boîtier 1000.

Le fait d'introduire une impédance de terminaison dans la prise P de raccordement téléphonique permet d'éviter les variations d'impédance susceptibles de se produire sur la ligne téléphonique LT, dans la bande 3-12 MHz, du fait de la présence de branches ouvertes et/ou de charges capacitives dans l'installation privative.

Le module d'ajustement 10, tel qu'illustré sur la figure 4, permet d'introduire cette impédance de terminaison dans la prise P.

Pour cela, le module se présente sous la forme d'un circuit RC. Plus précisément, ce circuit comprend au moins une résistance R, des condensateurs C1, C2 et des diodes à capacité variable D1, D2 encore dénommées diodes varicap ou varactor. Tous ces composants sont montés en série.

Les diodes varicap sont connues pour présenter une capacité qui varie lorsqu'elles sont polarisées en inverse. En fait, leur capacité diminue lorsque la tension inverse augmente. Ainsi, les diodes D1 et D2 présentent une capacité qui peut varier de quelques pF à quelques 100 pF selon la tension appliquée.

Dans l'exemple illustré sur la figure 4, ces diodes sont au nombre de deux. On peut cependant envisager de réaliser ce type de dispositif avec plus de deux diodes varicap, à condition que leur nombre soit pair.

Enfin, ces diodes sont disposées tête-bêche afin de polariser en inverse une des deux diodes et ce indépendamment de la polarité de la ligne téléphonique, comme cela est décrit plus en détails ci-après en regard de la figure 5. Ces deux diodes peuvent être montées indifféremment anode contre anode, ou cathode contre cathode. Dans la configuration représentée à la figure 4, où le dispositif adaptateur est dissocié et seul le module d'ajustement est implanté dans la prise de raccordement, les diodes D1 et D2 ne sont pas polarisées en inverse car elles sont isolées par les condensateurs C1 et C2 disposés de part et d'autre.

Dans ce cas l'ensemble du dispositif présente une impédance égale à la valeur de la résistance R, et de préférence de l'ordre de 135 Ω dans la bande de fréquences 3-12 MHz, cette valeur d'impédance correspondant à la valeur moyenne du câble constitutif la ligne téléphonique dans cette bande de fréquences. Pour obtenir cette impédance, les valeurs des composants sont judicieusement calculées et choisies. A titre d'exemple les condensateurs C1 et C2 présentent chacun une capacité de 100 nF tandis que la résistance R présente une valeur de 135 Ω.

La figure 5 schématise le dispositif adaptateur d'impédance dans une configuration assemblée, c'est-à-dire lorsque les modules d'ajustement 10 et de couplage 20 sont réunis. Un modem haut débit M, sur la prise duquel est inséré le module de couplage 20, est raccordé à l'installation par l'intermédiaire d'une prise de raccordement dans laquelle le module d'ajustement 10 a été préalablement inséré. Ainsi, lors du raccordement du modem à la prise, les modules 10 et 20 sont assemblés et coopèrent de manière à transformer automatiquement l'impédance insérée dans la prise pour que celle-ci puisse devenir transparente à la transmission haut-débit dans la bande de fréquences 3-12 MHz.

Le module de couplage comporte quatre points de contacts E1, S1 ; E2, S2 ; E3, S3 ; E4, S4. Deux d'entre-eux, E1, S1 et E4, S4 sont utilisés pour le raccordement au modem M. Les deux autres contacts E2, S2 et E3, S3 sont récupérés pour polariser les diodes varicap D1 et D2 du module d'ajustement, au travers de résistances R1 et R2.

En effet, le fait de placer la résistance R1 en parallèle sur le condensateur C1 du module d'ajustement et la résistance R2 en parallèle sur le condensateur C2 du module d'ajustement, permet de neutraliser les condensateurs C1 et C2 et de modifier la tension d'alimentation des diodes varicap D1, D2 et d'en polariser au moins une en inverse, à partir de la tension d'alimentation de -48 Volts de la ligne téléphonique LT.

Les diodes étant placées tête-bêche, l'une d'entre-elle présentera donc une très faible capacité de jonction par rapport à l'autre. Cette faible capacité de jonction d'une des deux diodes, D1 ou D2 selon la polarisation, permet d'obtenir une impédance infinie, typiquement de l'ordre de 1 kΩ à 10 MΩ.

Au moins une des 2 résistances R1 ou R2 présente une valeur très élevée, typiquement comprise entre 2 et 5 MΩ, par exemple de l'ordre de 2.2 MΩ, afin que la consommation de courant soit infinitésimale et que l'impédance résultante du dispositif ne s'en trouve pas également modifiée. Les deux résistances R1 et R2 peuvent être d'égale valeur pour rendre le montage symétrique par exemple.

Dans la réalisation proposée, les valeurs des composants ont été calculées afin de répondre aux différents problèmes de désadaptation dans la bande 3-12 MHz. Le choix des diodes varicap est important car il détermine les valeurs limites de l'impédance variable. Le meilleur rapport des capacités est obtenu avec des diodes de type BB132, que l'on trouve dans le commerce, pour une proportion de 1 à 30. En utilisant 6 diodes par exemple, on obtient une capacité qui varie de 450 pF (avec une tension de polarisation = 0) à 16.5 pF (avec une tension de polarisation de -28 V) , ce qui donne des fréquences de coupure respectives à 3 et 80 MHz environ.

Au-delà de 10 MHz, l'impédance du dispositif adaptateur est limitée par celle du (ou des) filtre(s) distribué (s) mis en parallèle au sein de l'ITC si celui (ceux)-ci n'est (ne sont) pas adapté(s) à la transmission VDSL.

La figure 6 illustre un deuxième mode de réalisation d'un dispositif adaptateur d'impédance d'au moins un canal de transmission haut-débit d'une installation terminale cuivre. Dans ce montage, le module d'ajustement, référencé 30, ne comporte qu'une seule diode varicap D1. Lorsque seul ce module d'ajustement est implanté dans une prise de raccordement, la diode D1 n'est pas polarisée en inverse puisqu'elle est isolée par les condensateurs C1 et C2 disposés de part et d'autre. Dans ce cas, le module d'ajustement présente une impédance égale à la valeur de la résistance R, et de préférence de l'ordre de 135 Ω dans la bande de fréquences 3 - 12 MHz, tel qu'expliqué ci-dessus en référence à la figure 4.

Dans ce mode de réalisation, le module de couplage, référencé 40, destiné à s'unir au module d'ajustement 30 lorsqu'un modem haut-débit M est branché sur la prise de raccordement, présente une construction un peu plus complexe que dans le premier mode de réalisation. Le module de couplage 40 comporte toujours quatre points de contact E1, S1 ; 1 E2, S2 ; E3, S3 ; E4, S4; deux d'entre eux E1, S1 et E4, S4 étant utilisés pour le raccordement au modem M. Les deux autres contacts E2, S2 et E3, S3 sont récupérés pour polariser en inverse la diode varicap D1 du module d'ajustement au moyen d'un pont redresseur et d'un pont de résistances R3, R4. Le pont redresseur, disposé dans le module de couplage 40, est constitué par des diodes de redressement D2, D3, D4, D5 montées deux à deux en parallèle et tête-bêche. Le pont redresseur intégré dans le module de couplage permet de modifier la tension d'alimentation de la diode varicap D1 et de la polariser en inverse à partir de la tension d'alimentation de - 48 volts de la ligne téléphonique pour obtenir une impédance infinie, typiquement comprise entre 1 kΩ et 10 MΩ.

De préférence, les résistances R3 et R4 formant le pont de résistances présentent une valeur élevée, typiquement comprise entre 2 et 5 MΩ, par exemple de l'ordre de 5 MΩ chacune, de manière à ce que la consommation de courant soit infinitésimale et que l'impédance résultante du dispositif ne s'en trouve pas modifiée.

Des tests ont été effectués sur le dispositif adaptateur d'impédance et ont porté sur des mesures de débit en ligne dans les deux sens de transmission sur une liaison VDSL. Ces tests ont permis de mesurer l'impact des branches ouvertes et/ou des charges capacitives dans la bande spectrale 3-12 MHz et ce avec ou sans dispositif. Cela a permis également de vérifier la transparence de ce dernier vis-à-vis de la transmission haut-débit.

L'installation terminale cuivre dans laquelle ces tests ont été réalisés est représentée sur la figure 7. L'installation privative commence à la réglette NID d'entrée de domicile. La liaison VDSL comprend un équipement côté central (DSLAM) avec un filtre passe-bas intégré, 600m de câble et un modem VDSL M dans la partie privative. L'ITC comprend trois prises P1, P2, P3 raccordées au réseau d'accès suivant une topologie en étoile (tronçons de 6 m).

Comme le montre la figure 7, toutes les prises de raccordement P1 à P3 comprennent non seulement des filtres FD1 à FD3 enfichables distribués pour le raccordement des terminaux TBE2 dans la bande vocale, mais également des dispositifs adaptateurs DA1 à DA3 pour les modems VDSL M ou les branches ouvertes BO1 et/ou capacitives TBE2. Un modem VDSL M est raccordé à la troisième prise P3.

Les mesures de débits en ligne sont données par le gestionnaire du système propriétaire et ce, pour une marge au bruit de 6dB du système.

Le tableau ci-dessous rassemble les résultats obtenus sur une liaison VDSL comportant des branches ouvertes adaptées ou non.

| Type de liaison | Débit en ligne (Mbit/s) | |
|---|---|---|
| | Canal descendant | Canal remontant |
| Sans branche ouverte | 27,72 | 7,93 |
| Avec branches ouvertes non adaptées | 13,56 | 1,92 |
| Avec branches ouvertes adaptées | 15,23 | 5,24 |

En présence de bruit E (bruits normalisés FFTExc côté central et côté installation), c'est le canal remontant qui est principalement affecté et qui, de ce fait, limite les performances de la liaison VDSL.

Les désadaptations relatives à l'ITC (branches ouvertes, branches capacitives) ainsi que la topologie de cette dernière (étoile, pont ou dérivation) doivent être prises en compte dans la mesure où elles s'ajoutent au bruit de diaphonie présent sur la ligne.

La présence d'impédances de terminaisons sur des branches ouvertes appartenant à l'installation Terminale Cuivre (ITC) est souhaitable. Les performances d'une liaison VDSL de longueur 600 m avec 2 branches ouvertes et/ou capacitives de 6 m de long en bout de ligne se dégradent. En comparaison, lorsqu'on insère le dispositif adaptateur au bout de chaque branche, on améliore les débits en ligne dans les deux sens de transmission. Ceci est particulièrement vrai pour le sens remontant.

Le dispositif adaptateur d'impédances est également transparent à la transmission haut-débit.

En adaptant les branches ouvertes à 135 Ω dans la bande spectrale (3 - 12 MHz), les débits en ligne sur une liaison VDSL sont améliorés d'une façon significative.

Enfin, le dispositif adaptateur d'impédances est réalisé à partir de composants bas-coût et peut facilement être intégré dans le même boîtier qu'un filtre distribué.

## Revendications

1. Dispositif adaptateur d'impédance d'au moins un canal de transmission haut-débit d'une installation terminale cuivre (ITC) raccordée à un réseau d'accès délivrant des services bande étroite, analogique ou RNIS, et des services large bande, x-DSL, ladite installation comprenant au moins un modem haut-débit (M) de type x-DSL, et au moins une prise de raccordement (P; P1, P2, P3), **caractérisé en ce qu'**il comprend:
- un module d'ajustement (10, 30), implanté dans ladite prise de raccordement (P ; P1, P2, P3), constitué par un circuit RC comprenant, en série, au moins une résistance (R), des condensateurs (C1, C2) et au moins une diode varicap (D1, D2), et destiné à insérer une impédance de terminaison dans ladite prise (P ; P1, P2, P3) de raccordement, lorsqu'elle n'est pas connectée audit modem haut-débit (M),
- un module de couplage (20, 40), raccordé au modem haut-débit (M) et destiné à s'unir audit module d'ajustement (10) lorsque ledit modem haut-débit (M) est raccordé à ladite prise (P ; P1, P2, P3) de raccordement, comprenant des résistances (R1, R2), chacune d'elles étant destinée à être connectée en parallèle sur un condensateur (C1, C2) du module d'ajustement (10) de manière à polariser en inverse au moins l'une des diodes varicap (D1, D2), de manière à transformer l'impédance insérée dans la prise de raccordement de telle sorte que cette dernière devienne transparente à la transmission haut-débit de services large bande.

2. Dispositif selon la revendication 1, **caractérisé en ce que** le module d'ajustement (10, 30) est disposé en parallèle à un filtre distribué (200).

3. Dispositif selon la revendication 1, **caractérisé en ce que** le module d'ajustement (10) comprend un nombre pair de diodes varicap (D1, D2), disposées tête-bêche.

4. Dispositif selon l'une des revendications 1 à 3, **caractérisé en ce que** le module d'ajustement (30) comporte une diode varicap (D1) et **en ce que** le module de couplage (40) comporte un pont redresseur, constitué de diodes de redressement (D2, D3, D4, D5), et un pont de résistances (R3, R4).

5. Dispositif selon l'une des revendications 1 ou 4, **caractérisé en ce que** l'une au moins des résistances (R1, R2 ; R3, R4) présente une valeur comprise entre 2 et 5 MΩ.

6. Dispositif selon l'une quelconque des revendications précédentes, **caractérisé en ce que** le modem haut-débit (M) est un modem du type VDSL.

7. Installation terminale cuivre (ITC), raccordée à un réseau d'accès portant des services bande étroite et des services large bande, comprenant des prises de raccordement (P ; P1, P2, P3) et au moins un modem haut-débit (M) de type x-DSL, **caractérisée en ce qu'**elle comporte des dispositifs adaptateurs d'impédance conformes à l'une des revendications 1 à 6.

8. Installation selon la revendication 7, **caractérisée** ne ce que les dispositifs adaptateurs présentent chacun deux modules (10, 20 ; 30, 40) destinés à s'unir lorsqu'un modem haut-débit (M) est connecté sur une prise de raccordement (P ; P1, P2, P3), le premier module (10 ; 30) étant implanté dans ladite prise de raccordement (P ; P1, P2, P3) sur l'accès du réseau, et l'autre module (20 ; 40) étant disposé dans la prise de branchement du modem haut-débit (M).

9. Procédé d'adaptation d'impédance d'au moins un canal de transmission haut-débit d'une installation terminale cuivre (ITC) raccordée à un réseau d'accès délivrant des services bande étroite et des services large bande, ladite installation comprenant au moins un modem haut-débit (M), et au moins une prise de raccordement (P ; P1, P2, P3), **caractérisé en ce que** le procédé comprend les étapes suivantes:
- Une étape d'ajustement comportant l'insertion d'une impédance de terminaison dans ladite prise (P ; P1, P2, P3) de raccordement, pour insérer un module d'ajustement (10, 30) comprenant, en série, au moins une résistance (R), des condensateurs (C1, C2) et au moins une diode varicap (D1, D2), lorsqu'elle n'est pas connectée audit modem haut-débit (M),
- et, lorsque ledit modem haut-débit est raccordé à ladite prise de raccordement, une étape de couplage comportant la transformation de ladite impédance insérée dans la prise de raccordement, de telle sorte que cette dernière devienne transparente à la transmission haut-débit de services large bande, pour insérer un module de couplage (20, 40) comprenant des résistances (R1, R2), chacune d'elles étant destinée à être connectée en parallèle sur un condensateur (C1, C2) dudit module d'ajustement (10) de manière à polariser en inverse au moins l'une des diodes varicap (D1, D2).

## Claims

1. Impedance adapter device for matching the impedance of at least one high-speed transmission channel of a copper terminal installation (CTI) hooked up to an access network delivering narrowband services, analogue or ISDN, and broadband services, x-DSL, said installation comprising at least one high-speed modem (M) of x-DSL type, and at least one jack (P; P1, P2, P3), **characterized in that** it comprises:
- an adjustment module (10, 30), implanted in said jack (P; P1, P2, P3), consisting of an RC circuit comprising, in series, at least one resistor (R), capacitors (C1, C2) and at least one varicap diode (D1, D2), and intended to insert a terminating impedance into said jack (P; P1, P2, P3), when it is not connected to said high-speed modem (M),
- a coupling module (20, 40), hooked up to the high-speed modem (M) and intended to be united with said adjustment module (10) when said high-speed modem (M) is hooked up to said jack (P; P1, P2, P3), comprising resistors (R1 ,R2), each of them being intended to be connected in parallel with a capacitor (C1, C2) of the adjustment module (10) so as to reverse bias at least one of the varicap diodes (D1, D2), so as to transform the impedance inserted into the jack in such a way that the latter becomes transparent to the high-speed transmission of broadband services.

2. Device according to Claim 1, **characterized in that** the adjustment module (10, 30) is disposed in parallel with a distributed filter (200).

3. Device according to Claim 1, **characterized in that** the adjustment module (10) comprises an even number of varicap diodes (D1, D2), disposed head-to-tail.

4. Device according to one of Claims 1 to 3, **characterized in that** the adjustment module (30) comprises a varicap diode (D1) and **in that** the coupling module (40) comprises a rectifier bridge, consisting of rectifying diodes (D2, D3, D4, D5), and a resistor bridge (R3, R4).

5. Device according to one of Claims 1 or 4, **characterized in that** one at least of the resistors (R1, R2; R3, R4) exhibits a value of between 2 and 5 MΩ.

6. Device according to any one of the preceding claims, **characterized in that** the high-speed modem (M) is a modem of the VDSL type.

7. Copper terminal installation (CTI), hooked up to an access network carrying narrowband services and broadband services, comprising jacks (P; P1, P2, P3) and at least one high-speed modem (M) of x-DSL type, **characterized in that** it comprises impedance adapter devices in accordance with one of Claims 1 to 6.

8. Installation according to Claim 7, **characterized in that** the adapter devices each exhibit two modules (10, 20; 30, 40) intended to be united when a high-speed modem (M) is connected to a jack (P; P1, P2, P3), the first module (10; 30) being implanted in said jack (P; P1, P2, P3) on the network access, and the other module (20; 40) being disposed in the jack socket of the high-speed modem (M).

9. Method of matching the impedance of at least one high-speed transmission channel of a copper terminal installation (CTI) hooked up to an access network delivering narrowband services and broadband services, said installation comprising at least one high-speed modem (M), and at least one jack (P; P1; P2, P3), **characterized in that** the method comprises the following steps:
- an adjustment step comprising the insertion of a terminating impedance into said jack (P; P1, P2, P3), so as to insert an adjustment module (10, 30) comprising, in series, at least one resistor (R), capacitors (C1, C2) and at least one varicap diode (D1, D2), when it is not connected to said high-speed modem (M);
- and, when said high-speed modem is hooked up to said jack, a coupling step comprising the transformation of said impedance inserted into the jack in such a way that the latter becomes transparent to the high-speed transmission of broadband services, so as to insert a coupling module (20, 40) comprising resistors (R1, R2), each of them being intended to be connected in parallel with a capacitor (C1, C2) of said adjustment module (10) so as to reverse bias at least one of the varicap diodes (D1, D2).

## Patentansprüche

1. Impedanzanpassungsvorrichtung mindestens eines Hochgeschwindigkeits-Übertragungskanals eines Kupfer-Endgeräts (ITC), das an ein Zugangsnetz angeschlossen ist, welches Schmalband-Dienste, analog oder ISDN, und Breitband-Dienste, x-DSL, liefert, wobei das Gerät mindestens ein Hochgeschwindigkeitsmodem (M) vom Typ x-DSL und mindestens eine Anschlussdose (P; P1, P2, P3) aufweist, **dadurch gekennzeichnet, dass** sie enthält:
- ein Anpassungsmodul (10, 30), das in die Anschlussdose (P; P1, P2, P3) eingesetzt ist, bestehend aus einer RC-Schaltung, die in Reihe mindestens einen Widerstand (R), Kondensatoren (C1, C2) und mindestens eine Varicap-Diode (D1, D2) aufweist, und dazu bestimmt ist, eine Abschlussimpedanz in die Anschlussdose (P; P1, P2, P3) einzufügen, wenn sie nicht mit dem Hochgeschwindigkeitsmodem (M) verbunden ist,
- ein Kopplungsmodul (20, 40), das an das Hochgeschwindigkeitsmodem (M) angeschlossen und dazu bestimmt ist, sich mit dem Anpassungsmodul (10) zu vereinen, wenn das Hochgeschwindigkeitsmodem (M) an die Anschlussdose (P; P1, P2, P3) angeschlossen ist, mit Widerständen (R1, R2), von denen jeder dazu bestimmt ist, parallel mit einem Kondensator (C1, C2) des Anpassungsmoduls (10) verbunden zu werden, um mindestens eine der Varicap-Dioden (D1, D2) invers zu polarisieren, um die in die Anschlussdose eingefügte Impedanz so umzuformen, dass die Anschlussdose für die Hochgeschwindigkeitsübertragung von Breitbanddiensten transparent wird.

2. Vorrichtung nach Anspruch 1, **dadurch gekennzeichnet, dass** das Anpassungsmodul (10, 30) parallel zu einem verteilten Filter (200) angeordnet ist.

3. Vorrichtung nach Anspruch 1, **dadurch gekennzeichnet, dass** das Anpassungsmodul (10) eine gerade Anzahl von Varicap-Dioden (D1, D2) enthält, die Kopf bei Fuß angeordnet sind.

4. Vorrichtung nach einem der Ansprüche 1 bis 3, **dadurch gekennzeichnet, dass** das Anpassungsmodul (30) eine Varicap-Diode (D1) aufweist, und dass das Kopplungsmodul (40) eine Gleichrichterbrücke, die aus Gleichrichterdioden (D2, D3, D4, D5) besteht, und eine Widerstandsbrücke (R3, R4) aufweist.

5. Vorrichtung nach einem der Ansprüche 1 oder 4, **dadurch gekennzeichnet, dass** mindestens einer der Widerstände (R1, R2; R3, R4) einen Wert zwischen 2 und 5 MΩ hat.

6. Vorrichtung nach einem der vorhergehenden Ansprüche, **dadurch gekennzeichnet, dass** das Hochgeschwindigkeitsmodem (M) ein Modem vom Typ VDSL ist.

7. Kupfer-Endgerät (ITC), angeschlossen an ein Zugangsnetz, das Schmalbanddienste und Breitbanddienste trägt, mit Anschlussdosen (P; P1, P2, P3) und mit mindestens einem Hochgeschwindigkeitsmodem (M) vom Typ x-DSL, **dadurch gekennzeichnet, dass** es Impedanzanpassungsvorrichtungen nach einem der Ansprüche 1 bis 6 aufweist.

8. Gerät nach Anspruch 7, **dadurch gekennzeichnet, dass** die Anpassungsvorrichtungen je zwei Module (10, 20; 30, 40) haben, die dazu bestimmt sind, sich zu vereinen, wenn ein Hochgeschwindigkeitsmodem (M) mit einer Anschlussdose (P; P1, P2, P3) verbunden wird, wobei das erste Modul (10; 30) in die Anschlussdose (P; P1, P2, P3) am Zugang zum Netz eingebaut ist, und das andere Modul (20; 40) in der Anschlussdose des Hochgeschwindigkeitsmodems (M) angeordnet ist.

9. Verfahren zur Impedanzanpassung mindestens eines Hochgeschwindigkeits-Übertragungskanals eines Kupfer-Endgeräts (ITC), das an ein Zugangsnetz angeschlossen ist, welches Schmalband-Dienste und Breitband-Dienste liefert, wobei das Gerät mindestens ein Hochgeschwindigkeitsmodem (M) und mindestens eine Anschlussdose (P; P1, P2, P3) aufweist, **dadurch gekennzeichnet, dass** das Verfahren die folgenden Schritte enthält:
- einen Anpassungsschritt, der die Einfügung einer Abschlussimpedanz in die Anschlussdose (P; P1, P2, P3) aufweist, um ein Anpassungsmodul (10, 30) einzufügen, das in Reihe mindestens einen Widerstand (R), Kondensatoren (C1, C2) und mindestens eine Varicap-Diode (D1, D2) enthält, wenn sie nicht mit dem Hochgeschwindigkeitsmodem (M) verbunden ist,
- und wenn das Hochgeschwindigkeitsmodem an die Anschlussdose angeschlossen ist, einen Kopplungsschritt, der die Umwandlung der in die Anschlussdose eingebauten Impedanz enthält, damit diese Anschlussdose für die Hochgeschwindigkeitsübertragung von Breitbanddiensten transparent wird, um ein Kopplungsmodul (20, 40) einzufügen, das Widerstände (R1, R2) enthält, von denen jeder dazu bestimmt ist, parallel mit einem Kondensator (C1, C2) des Anpassungsmoduls (10) verbunden zu werden, um mindestens eine der Varicap-Dioden (D1, D2) in Sperrrichtung vorzuspannen.
